# EUROPEAN PATENT SPECIFICATION

(11) **EP 1 916 515 B1**
(45) Date of publication and mention of the grant of the patent: **17.09.2014**
(21) Application number: 07118629.0
(22) Date of filing: 16.10.2007
(51) Int. Cl.: G01N 21/90, B07C 5/34

(54) **Machine for inspecting glass containers**
Maschine zur Überprüfung von Glasbehältern
Machine pour inspecter des conteneurs de verre

(30) Priority: 23.10.2006 US 585398; 23.10.2006 US 585388; 23.10.2006 US 585767
(43) Date of publication of application: 30.04.2008
(73) Proprietor: Emhart Glass S.A., 6330 Cham (CH); Applied Vision Company, LLC, Akron, OH 44223 (US)
(72) Inventor: Novini, Amir R., Akron, OH 44333 (US); Diehr, Richard D., Horseheads, NY 14845 (US); Sones, Richard A., Cleveland Heights, OH 44118 (US)
(74) Representative: Warren, Anthony Robert

(56) References cited:
- WO-A2-2006/011803
- GB-A- 2 350 423
- US-A- 4 701 612
- US-A- 4 945 228
- US-A- 5 200 801
- US-A- 5 895 911
- US-A1- 2005 248 766

## Description

The present invention relates to machines, which inspect glass containers for defects, and more particularly, to a system which inspects for cracks in translucent glass containers.

In the glass container industry, small cracks or fractures in the glass are referred to as "check defects" or "checks". Checks can range from sub millimeters to several hundred millimeters and can be oriented at any direction from vertical to horizontal. Glass is not a crystalline structure by nature, but most cracks propagate roughly along a plane of some orientation in space mostly determined by the shape of the glass at that location. For example, a crack that began as a vertical crack at the upper surface of the mouth primarily propagates in a vertical plane. Checks can appear in any orientation and on any portion of a container and can exist wholly within the glass or may penetrate to one or both surfaces. Checks are considered phase objects and do not absorb light like a solid object does. Checks are primarily reflective in nature if their opposed surface separation is at least half a wavelength of light. However, very few checks with a smaller separation will reflect light and accordingly they will not likely be detectable by direct reflection methods, but they might have scattering points when they penetrate to the one or both surfaces of the container and will scatter light back to the sensors.

Most of these crack defects will drastically weaken the bottle, often causing it to rupture or to leak. Therefore, bottle manufactures like to remove these containers before they reach filing plants. Checks appearing near the mouth of the containers are called finish checks. In the glass bottle industry, the term "container finish" refers to the portion of the bottle that defines the mouth, threads or beads, and the ring. The upper surface of the mouth is referred as the sealing surface.

Almost all commercially available check detectors work on the principle of reflected light. A conventional check detector consists of a series of continuously operating light spot light sources and associated photodetectors that are positioned so that known checks on a bottle rotating at an inspection station will reflect light from one of the sources to one of the photo-detectors. Signal processing of the photodetector outputs recovers the sharp peaks while rejecting lower frequency signal variations caused by ambient light, reflection from the bottle sidewall, etc.

While commercially available check detectors are successfully deployed on most glass bottle production lines, there are several drawbacks to the approach. A few of those are: many point sensors are required for many possible reflection angles; some sensor angles are difficult to position; additional sensors and lights need to be added as more production defects appear; time consuming setup is required for each type of container; and the difficulty of reproducing the same setup from one inspection line to another.

The following U.S. Patents Numbers 4,701,612, 4,945,228, 4,958,223, 5,020,908, 5,200,801, 5,895,911, 6,104,482, 6,211,952, and 6,275,287 all relate to devices that detect defects in the finish of a container.

The present invention is directed to a machine for inspecting a glass container for defects, generally of the type disclosed in the aforesaid US-A-4,945,228, and as defined in the preamble of claim 1, comprising means for rotating a glass container about a vertical axis at the inspection station, a light source for illuminating a selected portion of the glass container during rotation of the container, the light source having a selected illumination "on" time followed by a selected "off" time, a computer configured to turn the light source "on" and "off" a plurality of consecutive times the container being rotatable through a defined angle of rotation while the light source is successively "on" and "off" said plurality of times, a camera including a triggerable imaging portion for imaging the selected illuminated portion of the glass container, and including a detector axis inclined to the horizontal, the computer being configured to trigger the imaging portion of the camera so that the camera will image the selected portion of the container as the container rotates through the defined angle of rotation, and to capture and transfer the image when the camera imaging portion is triggered.

In this US-A, the optical axes of a light source and camera located above the mouth of a container are inclined downwardly onto the sealing surface around the container mouth, so that the camera will receive light from the light source reflected by the sealing surface. The light source may be strobed, and the rows of elements which make up the area array of the camera are scanned at each strobe increment. Thus, there is developed a succession of discrete still or stop-action images of the sealing surface as the container rotates. Alternatively, the light source may be continuously illuminated with the speed of scanning the area array being sufficient to develop stop-action images of the sealing surfaces. A second light source may be provided to direct light horizontally onto a step-down shoulder inside the container mouth so that the camera will also receive light reflected by the shoulder.

In the aforementioned US-5,200,801, a camera and a single light source are located respectively above and below the sealing surface of the container mouth. The optical axis of the camera is at an angle to and coplanar with the optical axis of the light source so that a check will reflect light from the source to the camera to produce a bright image of the check against a normally dark or grey background. The light source is pulsed or strobed so that the camera element array will receive a sharp image containing full information regarding check size at each increment of container rotation. An information processor scans the camera element array at each increment of rotation and stores each frame or image detected at successive increments of container rotation. As an alternative, the light source may be an incandescent lamp, in which case the image of the check will smear as the container rotates incrementally during each frame time, reducing the information about the actual check size.

It is an object of the present invention to provide an apparatus for inspecting glass containers, which can detect vertical, horizontal, and any other angle cracks on a bottle, which is user friendly and easily adjusted. Another object of this invention is to provide a detector that can detect known types of checks and also any new checks without specific setup requirements.

According to the present invention, there is provided a machine of the type described above, having the features defined in the characterizing clause of claim 1.

The present invention will now be described with reference to the accompanying drawings which illustrate a presently preferred embodiment incorporating the principles of the invention, and in which:-
Figure 1 is an oblique elevational schematic view of an inspection station of a machine for inspecting glass containers for checks and other defects, made in accordance with the teachings of the present invention.
Figure 2 is a block diagram showing the operation of the pair of light sources and camera shown in Figure 1;
Figure 3 is a schematic top view of the container at the inspection station showing the light axes of a pair of light sources and the camera;
Figure 4 is a schematic elevational view showing the light axes of the light sources and camera shown in Figure 3;
Figure 5 is a logic diagram illustrating the operation of the camera system of the inspection machine;
Figure 6 is a logic diagram illustrating the operation of the lighting system of the inspection machine;
Figure 7 is a timing diagram illustrating the operation of the light sources;
Figure 8 is a side elevational view of one of the light sources; and
Figure 9 is an elevational view showing how the LED's of one of the light sources are aimed toward the finish.

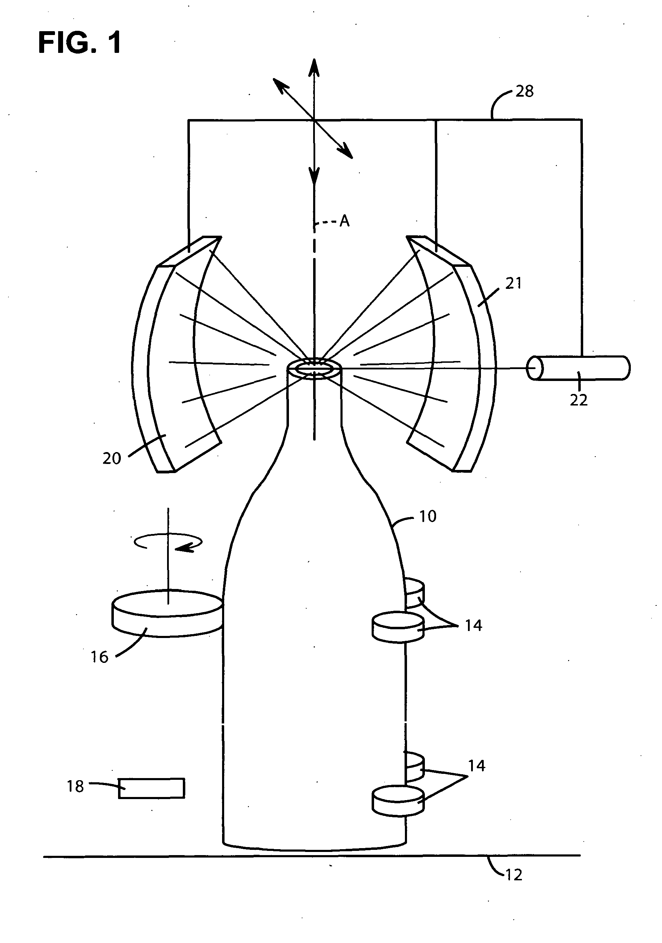

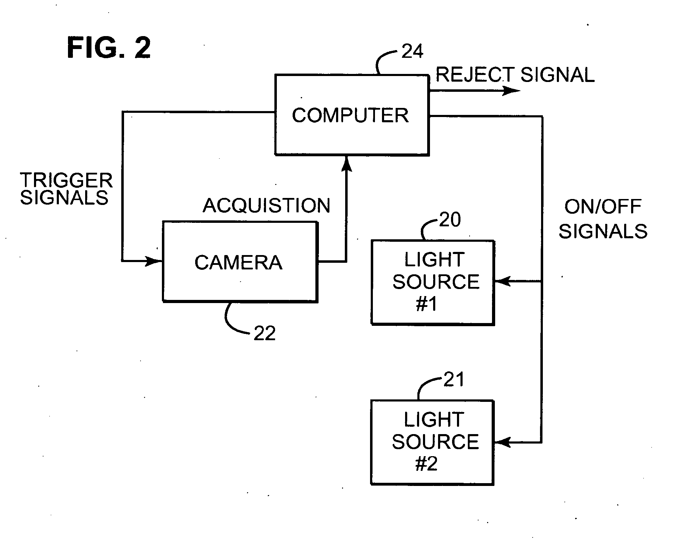

In a machine for inspecting glass containers (bottles), the containers 10 are transported along a conveyor 12 to an inspection station illustrated in Figure 1. The conveyor may be a linear belt or a turret type feed system. A container 10 is engaged by upper and lower rear pairs of idler rollers 14 and a front drive wheel 16 so that rotation of the drive wheel in the clockwise direction will rotate the container in the counterclockwise direction. There is conveyor dwell of sufficient duration at the inspection machine so that the container can be rotated more than 360 degrees while the inspection takes place. A container present sensor 18 will sense the presence of a container at the inspection station (the sensor can be upstream and the actual presence of the container at the inspection station could be defined by an encoder count following the sensing of the container by the upstream container present sensor). Light sources (Light Source #1/20 (see Figures 1 and 2) and Light Source #2/21) illuminate the finish portion of the container and a Camera/22 images the finish portion.

Figure 2 illustrates the operation of the Camera and Light Sources. A Computer 24 delivers On/Off signals to Light Source #1/20 and Light Source #2/21 and delivers Camera Trigger signals to the Camera/22. The Camera has a matrix array of elements (pixels) to receive an image of the finish portion of the container during the Camera's exposure period. The Camera could be a CCD, MOS or like camera which will store an image until the next Trigger Signal. When a Trigger Signal is received, the existing image will be captured and transferred, as an "Acquisition", to the Computer so that it can be recorded and processed by the Computer. The Computer will issue a Reject Signal if a defect is identified.

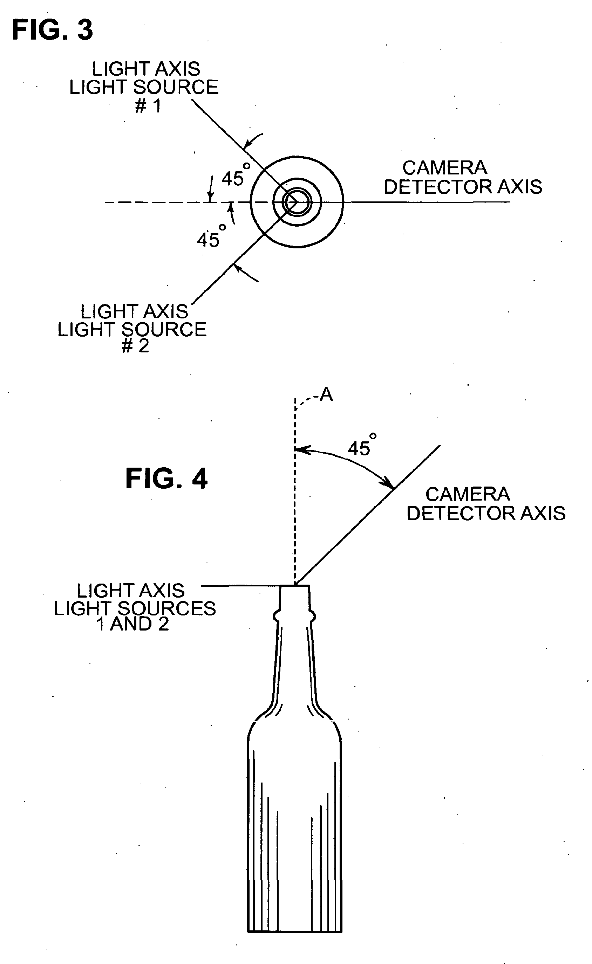

As can be seen from Figures 3 and 4, the Light Axis for each light source is horizontal and intersects the axis "A" of the container. Each Light Axis also lies in a vertical or "Z" plane (not shown) which intersects the axis "A" of the container, and is a positive plane in that it is in front of the container. The two light axes are orthogonal to each other and 45° to a vertical or "Z" plane including the Camera Detector Axis. The Detector Axis for the Camera/22, which is located in a negative "Z" plane in that it is behind the container, is approximately 45° from horizontal. With this relationship, the camera is looking at a dark field and seeing only light coming from the checks. The light sources and camera are supported by structure 28 that can be vertically displaced and horizontally displaced to reposition the system for different height/diameter containers.

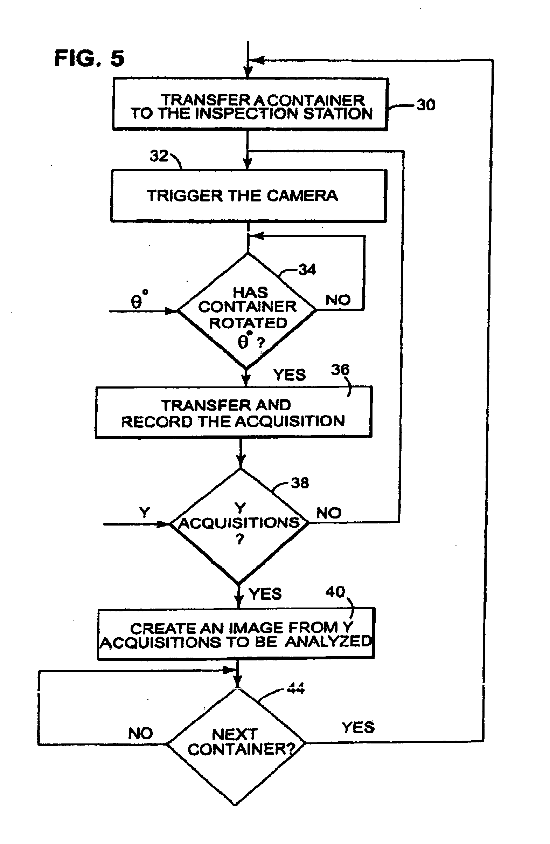

With reference to Figure 5, to start an inspection of a container, for example a bottle, the machine will Transfer A Container To The Inspection Station/30. Following a time sufficient for the rotation of the container, by the drive wheel, to become stable, the Computer will Trigger The Camera/32. This starts the acquisition of the image. The following explanation is provided in terms of angles for purposes of clarity, but it should be understood that, in a digitally controlled camera, instructions may be time based rather than defining actual angles so that when something is to occur in an approximate θ° (60° is the defined angle of rotation in the preferred embodiment), an approximate time (number of pulses) may be selected which approximately corresponds to that angle, and where events are desired approximately every 7.5°, for example, the pulses could be divided by 8. When the query "Has Container Rotated θ°?" /34 (θ° or a selected number of pulses corresponding approximately to that angle of rotation can be set) is answered in the affirmative, the Computer will Transfer And Record The Acquisition/36. Once the Camera is triggered, the Camera will capture data until the Camera is again triggered (following the rotation through θ°). When the Computer answers the query "Y Acquisitions?" in the negative, the Computer will again Trigger The Camera/32. When the computer answers the query "Y Acquisitions?" /38 in the affirmative ("Y' may be set and is six in the preferred embodiment), the Computer will Create An Image From Y Acquisitions To be Analyzed/40. The image created (a Critical Addition), where as in the preferred embodiment "Y" is six, will represent the entire (approximately) 360° surface of the finish and will be the Critical Addition of six acquisitions each imaging eight illuminations.

The critical addition will be made in a manner that will maximize the data that indicates that a defect is present. The Critical Addition can represent for each pixel location, the highest intensity of the corresponding pixel in all six Acquisitions which will make up the Critical Addition. Then, when the Computer answers the inquiry Next Container?/44 in the affirmative, the next bottle can be processed.

An image processing technique may be used to enhance the signal created by checks from signals created by mold features of the container. First, a reference or "mask image", can be created using a set of sample containers without defects running through the inspection setup (containers without defects are referred as "good ware" and containers with defects that need to be removed during the inspection as "bad ware"). To incorporate all the signals created by good ware from different molds that may contain slightly different structural variations, and small variations of signals due to vibrations and rotation, a large number of images can be acquired and processed to create the mask image. These images contain almost all the possible variations of light reflection by mold marks, threads, seams, and curved surface of good ware. Mask image is created by combining all the good ware images. An image of a container under inspection is created and is compared with the reference or mask image created with good ware. The difference between the inspected container image and the mask image shows the signals created by check defects.

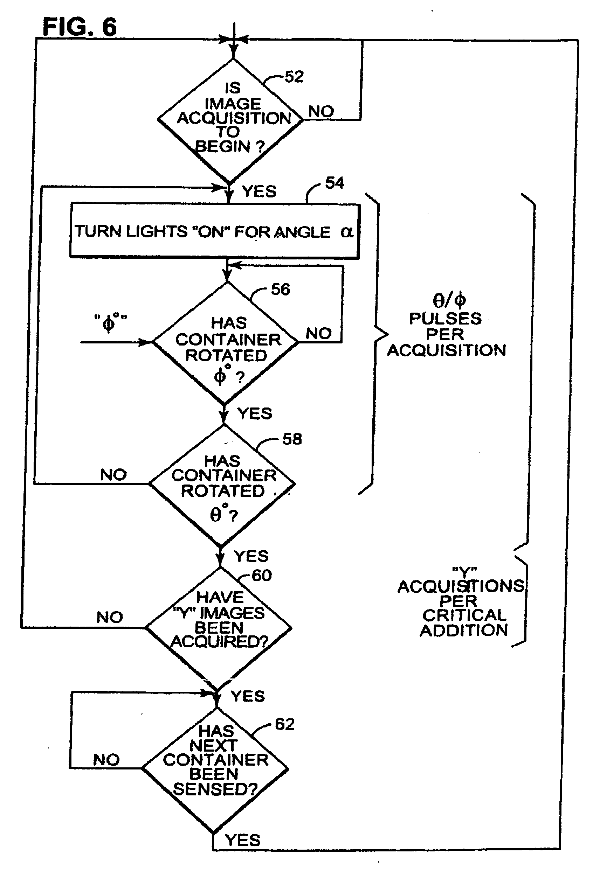

Figure 6 illustrates the operation of the light sources. When the Computer answers the query "Is Image Acquisition To Begin?" /52 in the affirmative, the Computer will "Turn Lights "On" For Angle α"/54 ("α" may be set and could be a defined number of pulses). When the Computer answers the query "Has Container Rotated ϕ°"/56 in the affirmative (ϕ can be set) , and answers the query "Has Container Rotated θ°?" /58 in the negative, the light sources will again be turned "on". When this inquiry is answered in the affirmative (θ/ϕ pulses per acquisition), and the query "Have Y" Images Been Acquired?"/60, in the negative the entire surface has not been imaged and the entire process can be repeated until "Y" images have been acquired (Y pulses per acquisition). Then, when the computer answers the inquiry "Has Next Container Been Sensed?" /62 in the affirmative, the entire process can be repeated for the next container. If the lights are to be on for the entire time that the camera is triggered (α can be set to equal θ°).

To reduce noise, α is, in the preferred embodiment, defined so that the surface will be illuminated a small portion (25%) of the angle ϕ°, e.g. by strobing the light sources for the entire time the camera is triggered. Checks that will cause a container to be rejected have been found to be imaged when the light sources are "on" only a small fraction of ϕ°. This fraction can be empirically varied to achieve a desired result.

While the imaging process has been disclosed with reference to checks in the finish area of the container, it can be used to inspect other selected areas of containers, for example to identify body or heel checks and other defects.

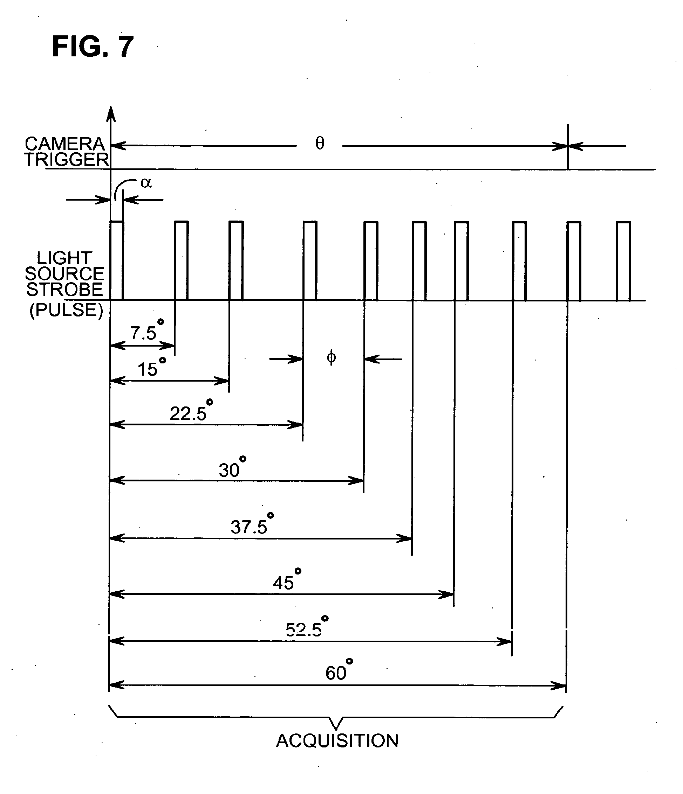

Figure 7 is a timing diagram for an Acquisition comprised of light sources turned on α degrees for every ϕ °(7.5° in the preferred embodiment) through θ° (60° in the preferred embodiment). The lower the ratio of α/ϕ°, the less noise will be available to interfere with the desired signal.

The light sources 20 and 21 shown schematically in Figure 1, are mirror images and are represented as segments of an arc. These segments may be arcuate in both vertical and horizontal directions relative to the light axes. However, it is not essential for the segments or light sources to be physically arcuate or curved, and other means may be provided to achieve the required direction or pattern of illumination.

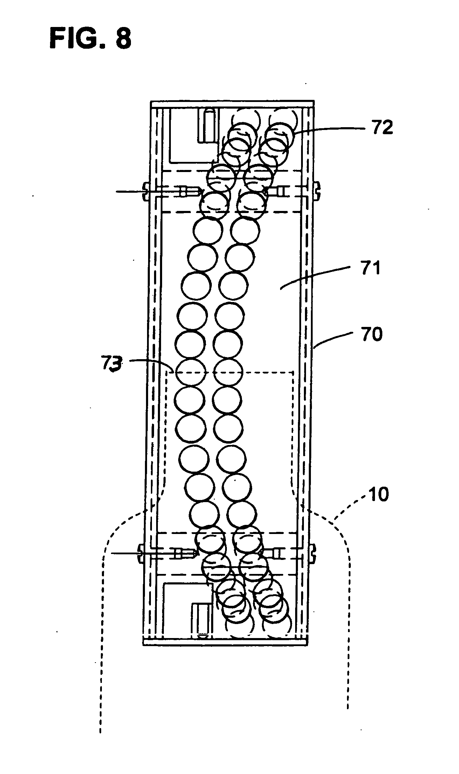

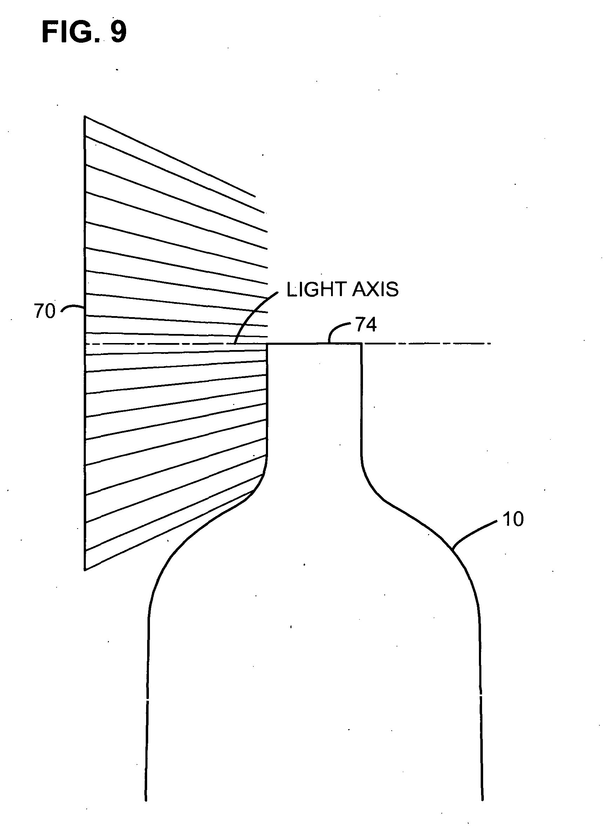

For example, as shown in Figures 8 and 9, in one realization, each light source 70 may be a flat panel or segment having vertical or generally upright columns and horizontal or generally horizontal rows of LEDs (not visible in Figure 9) with the individual LEDs oriented, i.e. inclined, so that their optical axes are directed in the required directions. Therefore, the flat panel is effectively optically equivalent to an arcuate or approximately part-conical segment.

As shown in Figure 8, the light source 70, mounted on a flat panel 71, is perpendicular to the Light Axis and faces the finish of the container 10 which is shown in dotted lines. The segment has inner and outer (or three or four,..) columns of LEDs 72 with the central LEDs 73, which define the Light Axis, standing parallel to the Light Axis at the sealing surface 74 and with the remaining LEDs or rows of LEDs being progressively tilted toward the light axis as they proceed away from the Light Axis. The locations of the LEDs in each column may follow an arcuate path on or in the flat panel 71 as shown in Figure 8. The progressive tilting or bending of the individual LEDs is indicated by the darkened semicircles, and, in the upper and lower regions of the panel 71, by the displacement of the front faces of the LEDs (shown as full-line circles) relative to their mountings (shown as broken-line circles). The preferred location of the Light Axis is at the sealing surface 74 but it can be located from the sealing surface to the bottom of the finish. The ideal geometry that the preferred embodiment attempts to approach is that of conical illumination (the cone being horizontal with its apex at the finish), where the top and bottom of the cone are dark so that the camera will not see any direct reflections of light. Viewing the finish as a torus, this conical geometry allows the maximum light to be projected onto the finish with direct reflection. Only an anomaly in the finish (a check) will generate direct reflections to the camera.

This apparatus has following advantages: because the area sensor, i.e. the camera, images an area of the container, it is possible to detect almost all the checks in that region. This makes the inspection independent of the specific orientation and location of the check, and thus enables "new" checks to be detected without changing the setup. The positioning of the area array sensors and light sources will not depend essentially on the geometry of the container. It will be easier to setup for most of the containers with little or no adjustments.

## Claims

1. A machine for inspecting a glass container (10) at an inspection station for defects comprising
means for rotating a glass container about a vertical axis (A) at the inspection station,
a light source (20,21) having a horizontal axis and being suitable for illuminating a selected portion (74) of the glass container during rotation of the container,
a camera (22) including a triggerable imaging portion for imaging the selected illuminated portion of the glass container, and including a detector axis inclined to the horizontal,
a computer (24) being configured to trigger the imaging portion of said camera so that the camera will image said selected portion of the container as said container rotates through a defined angle of rotation (θ), and to capture and transfer the image when the camera imaging portion is triggered,
**characterized in that** it further comprises
means for positioning the light source (20,21) and the camera (22) being such that a dark field will be imaged by the camera when the selected portion (74) of the glass container is illuminated by the light source, the imaged dark field including light reflected or scattered from a defect if present,
means (24) for synchronizing rotating of the container through a defined angle of rotation (θ) and switching said light source successively "on" and "off" a plurality of consecutive times during rotation to generate a corresponding plurality of illuminations of the selected portion of the glass container, and
means for setting said camera's (22) exposure time at least equal to the time required for the glass container (10) to rotate through said defined angle of rotation (θ), and **in that**
said computer (24) is configured to trigger the imaging portion of said camera (22) when the container is at the beginning of each of a succession of said defined angles of rotation (θ), and
transfer and record each image having said plurality of illuminations when the imaging portion is triggered at the end of each of said defined angles of rotation, and
to perform an addition of a plurality (Y) of recorded images with each image including said plurality of illuminations, for inspection for defects.

2. A machine for inspecting a glass container according to claim 1, wherein the computer (24) is configured to define a critical addition of the plurality (Y) of recorded images, within a corresponding plurality of said defined angles (θ).

3. A machine for inspecting a glass container according to claim 2, wherein the imaging portion of the camera (22) comprises a matrix array of pixels which receives an image of the selected portion (74) of the container, and wherein the critical addition includes, for each pixel location of the matrix array, the highest intensity of the corresponding pixel in all (Y) recorded images within the plurality of said defined angles (θ).

4. A machine for inspecting a glass container according to any preceding claim, wherein the light source is configured such that the selected portion (74) of the glass container that is illuminated by the light source is the finish portion of the container (10).

5. A machine for inspecting a glass container according to any preceding claim, wherein the computer is configured such that the addition of the plurality (Y) of recorded images enables the detection of a check.

6. A machine for inspecting a glass container according to any preceding claim, wherein the angle defined by said defined angle of rotation (θ) is a portion of 360 degrees.

7. A machine for inspecting a glass container according to any preceding claim, wherein said light source (20, 21) comprises a pair of orthogonally related LED panels

## Patentansprüche

1. Maschine zum Inspizieren eines Glasbehälters (10) an einer Kontrollstation für Defekte, umfassend
Mittel zum Drehen eines Glascontainers um eine vertikale Achse (A) an der Kontrollstation,
eine Lichtquelle (20, 21) mit einer horizontalen Achse und geeignet zur Beleuchtung eines ausgewählten Teils (74) des Glasbehälters während der Drehung des Behälters,
eine Kamera (22) umfassend einen auslösbaren Bildgeberteil zur Abbildung des gewählten beleuchteten Teils des Glasbehälters und umfassend eine zur Horizontalen geneigte Detektorachse,
einen Computer (24) der konfiguriert ist, den Bildgeberteil der Kamera auszulösen, so dass die Kamera den ausgewählten Teil des Behälters abbilden wird, wenn sich der Container um einen definierten Drehwinkel (Θ) dreht, und das Bild aufzunehmen und zu übertragen, wenn der Bildgeberteil der Kamera ausgelöst wird,
**dadurch gekennzeichnet, dass** sie weiter umfasst
Mittel zur Positionierung der Lichtquelle (20, 21) und der Kamera (22), so dass ein dunkles Feld von der Kamera aufgenommen wird, wenn der ausgewählte Teil (74) des Glasbehälters mit der Lichtquelle beleuchtet wird, wobei das aufgenommene dunkle Feld Licht umfasst, das von einem Defekt reflektiert oder gestreut wird, falls vorhanden,
Mittel (24) zur Synchronisation der Drehung des Behälters um einen definierten Drehwinkel (Θ) und zum mehrmaligem sukzessivem Schalten der Lichtquelle "Ein" und "Aus" zu aufeinanderfolgenden Zeitpunkten während der Drehung, um eine zugehörige Vielzahl von Beleuchtungen des gewählten Teils des Glasbehälters zu erzeugen, und
Mittel zum Einstellen der Belichtungszeit der Kamera (22) zumindest gleich der Zeit, die der Glascontainer (10) benötigt, um sich über den definierten Drehwinkel (Θ) zu drehen, und dadurch
dass der Computer (24) konfiguriert ist, den Bildgeberteil der Kamera (22) zu schalten, wenn der Behälter am Beginn einer jeden Abfolge der definierten Drehwinkel (Θ) ist, und
jedes Bild mit der Vielzahl von Beleuchtungen zu übertragen und aufzuzeichnen, wenn der Bildgeberteil am Ende jedes definierten Drehwinkels geschaltet wird, und
um eine Hinzufügung einer Vielzahl (Y) von aufgenommenen Bildern durchzuführen, wobei jedes Bild die Vielzahl von Beleuchtungen zur Kontrolle auf Defekte umfasst.

2. Maschine zum Inspizieren eines Glasbehälters gemäß Anspruch 1, wobei der Computer (24) konfiguriert ist, eine kritische Hinzufügung der Vielzahl (Y) von aufgenommenen Bildern innerhalb einer zugehörigen Vielzahl der definierten Winkel (Θ) zu definieren.

3. Maschine zum Inspizieren eines Glasbehälters gemäß Anspruch 2, wobei der Bildgeberteil der Kamera (22) ein Matrixfeld von Pixeln umfasst, welches ein Bild des ausgewählten Teils (74) des Behälters empfängt und wobei die kritische Hinzufügung für jeden Pixelort des Matrixfeldes die höchste Intensität des zugehörigen Pixels in allen (Y) aufgenommenen Bildern innerhalb der Vielzahl der definierten Winkel (Θ) umfasst.

4. Maschine zum Inspizieren eines Glasbehälters gemäß einem der vorhergehenden Ansprüche, wobei die Lichtquelle konfiguriert ist, so dass der ausgewählte Teil (74) des Glasbehälters, der durch die Lichtquelle beleuchtet wird, der Abschlussteil des Behälters (10) ist.

5. Maschine zum Inspizieren eines Glasbehälters gemäß einem der vorhergehenden Ansprüche, wobei der Computer konfiguriert ist, so dass die Hinzufügung der Vielzahl (Y) der aufgenommenen Bilder die Identifizierung eines Defekts erlaubt.

6. Maschine zum Inspizieren eines Glasbehälters gemäß einem der vorhergehenden Ansprüche, wobei der durch den Drehwinkel (Θ) definierte Winkel ein Anteil von 360 Grad ist.

7. Maschine zum Inspizieren eines Glasbehälters gemäß einem der vorhergehenden Ansprüche, wobei die Lichtquelle (20, 21) ein Paar von orthogonal zueinander in Beziehung stehender LED-Panels umfasst.

## Revendications

1. Machine pour inspecter un contenant en verre (10) dans un poste d'inspection de défauts, comprenant
des moyens pour mettre en rotation un contenant en verre autour d'un axe vertical (A) dans le poste d'inspection,
une source de lumière (20, 21) présentant un axe horizontal et adaptée pour éclairer une partie sélectionnée (74) du contenant en verre pendant la rotation du contenant,
une caméra (22) comprenant une partie d'imagerie pouvant être déclenchée pour imager la partie éclairée sélectionnée du contenant en verre, et comportant un axe de détection incliné par rapport à l'horizontale,
un ordinateur (24) configuré pour déclencher la partie d'imagerie de ladite caméra, de telle manière que la caméra imagera ladite partie sélectionnée du contenant à mesure que ledit contenant tourne sur toute l'étendue d'un angle de rotation (θ) défini, et pour capturer et transférer l'image lorsque la partie d'imagerie de la caméra est déclenchée,
**caractérisée en ce qu'**elle comprend en outre
des moyens pour positionner la source de lumière (20, 21) et la caméra (22) de telle manière qu'un champ noir sera imagé par la caméra lorsque la partie sélectionnée (74) du contenant en verre est éclairée par la source de lumière, le champ noir imagé comportant une lumière réfléchie ou diffusée à partir d'un défaut si celui-ci est présent,
des moyens (24) pour synchroniser la rotation du contenant sur toute l'étendue d'un angle de rotation (θ) défini et commuter successivement ladite source de lumière sur « marche » et sur « arrêt » à plusieurs reprises et de manière consécutive pendant la rotation pour produire une pluralité correspondante d'éclairages de la partie sélectionnée du contenant en verre, et
des moyens pour régler le temps d'exposition de ladite caméra (22) pour qu'il soit au moins égal au temps nécessaire pour que le contenant en verre (10) tourne sur toute l'étendue dudit angle de rotation (θ) défini, et **en ce que**
ledit ordinateur (24) est configuré pour déclencher la partie d'imagerie de ladite caméra (22) lorsque le contenant se situe au début de chacun d'une succession desdits angles de rotation (θ) définis, et
pour transférer et enregistrer chaque image présentant ladite pluralité d'éclairages lorsque la partie d'imagerie est déclenchée à la fin de chacun desdits angles de rotation définis, et
pour réaliser une addition d'une pluralité (Y) d'images enregistrées avec chaque image comprenant ladite pluralité d'éclairages, pour l'inspection pour la détection de défauts.

2. Machine pour inspecter un contenant en verre selon la revendication 1, dans laquelle l'ordinateur (24) est configuré pour définir une addition critique de la pluralité (Y) d'images enregistrées, dans une pluralité correspondante desdits angles (θ) définis.

3. Machine pour inspecter un contenant en verre selon la revendication 2, dans laquelle la partie d'imagerie de la caméra (22) comprend une matrice de pixels recevant une image de la partie sélectionnée (74) du contenant, et dans laquelle l'addition critique comprend, pour chaque emplacement de pixel de la matrice, la densité la plus élevée du pixel correspondant dans toutes (Y) les images enregistrées dans la pluralité desdits angles (θ) définis.

4. Machine pour inspecter un contenant en verre selon une quelconque revendication précédente, dans laquelle la source de lumière est configurée de telle manière que la partie sélectionnée (74) du contenant en verre qui est éclairée par la source de lumière est la partie de finition du contenant (10).

5. Machine pour inspecter un contenant en verre selon une quelconque revendication précédente, dans laquelle l'ordinateur est configuré de telle manière que l'addition de la pluralité (Y) d'images enregistrées permet la détection d'une fissure.

6. Machine pour inspecter un contenant en verre selon une quelconque revendication précédente, dans laquelle l'angle défini par ledit angle de rotation (θ) défini est une partie de 360 degrés.

7. Machine pour inspecter un contenant en verre selon une quelconque revendication précédente, dans laquelle ladite source de lumière (20, 21) comprend une paire de panneaux à DEL à relation orthogonale.
